# EUROPÄISCHE PATENTSCHRIFT

(11) **EP 4 553 368 B1**
(45) Veröffentlichungstag und Bekanntmachung des Hinweises auf die Patenterteilung: **04.03.2026**
(21) Anmeldenummer: 24165916.8
(22) Anmeldetag: 25.03.2024
(51) Int. Cl.: F16T 1/12, F16T 1/16, F16T 1/20

(54) **KOMBINIERTES BELÜFTUNGS-, ENTLÜFTUNGS- UND WASSERAUSLASSVENTIL UND KLIMASCHRANK MIT EINEM SOLCHEN KOMBINIERTEN BELÜFTUNGS-, ENTLÜFTUNGS- UND WASSERAUSLASSVENTIL**
COMBINED VENTILATION, VENTILATION AND WATER OUTLET VALVE AND AIR CONDITIONING CABINET HAVING SUCH A COMBINED VENTILATION, VENTILATION AND WATER OUTLET VALVE
SOUPAPE COMBINÉE DE VENTILATION, DE VENTILATION ET DE SORTIE D'EAU ET ARMOIRE CLIMATIQUE DOTÉE D'UNE TELLE SOUPAPE COMBINÉE DE VENTILATION, DE VENTILATION ET DE SORTIE D'EAU

(30) Priorität: 13.11.2023 DE 102023131448
(43) Veröffentlichungstag der Anmeldung: 14.05.2025
(73) Patentinhaber: Binder GmbH, 78532 Tuttlingen (DE)
(72) Erfinder: Kossmann, Robin, 78532 Tuttlingen (DE); Zimmerer, Philipp, 78628 Rottweil (DE); Buschle, Jochen, 78532 Tuttlingen (DE)
(74) Vertreter: Westphal, Mussgnug & Partner Patentanwälte mbB

(56) Entgegenhaltungen:
- GB-A- 2 479 772
- US-A1- 2008 099 083
- US-A1- 2019 226 715

## Beschreibung

Klimaschränke sind eine Klasse von Laborschränken, in deren Innenraum definierte Bedingungen insbesondere im Hinblick auf Temperatur und Luftfeuchtigkeit eingestellt und aufrechterhalten werden können. Dementsprechend ist es wichtig, den Innenraum möglichst gut zu dämmen, um unerwünschten Wärmeaustausch mit der Umgebung zu vermeiden. Gleichzeitig muss der Innenkessel auch gut abgedichtet sein, um einen Verlust von Feuchtigkeit bzw. Wasserdampf zu vermeiden.

Ein wichtiges Anwendungsgebiet für Klimaschränke ist ihr Einsatz als Umweltsimulationsschrank, bei Materialprüftests, insbesondere Materialprüftests, bei denen das Verhalten des zu prüfenden Material als Reaktion auf sich wiederholt oder ständig ändernde Betriebspunkte, insbesondere bei variierenden Temperaturen und variierenden Feuchtigkeitskonzentrationen, untersucht wird. Unglücklicherweise können solche Änderungen der Umgebungsbedingungen dazu führen, dass ein Druckausgleich und gegebenenfalls auch das Ausschleusen von anfallendem Kondensat aus dem Innenraum des Klimaschranks möglich sein muss. Dies gilt erst recht, wenn durch geplante oder versehentliche Türöffnungen Temperatursprünge entstehen können, die eine Implosion hervorrufen könnten. Um diese Möglichkeit bereitzustellen, weisen bekannte Klimaschränke ein Über- und ein Unterdruckventil sowie einen Kondenswasserablauf auf. Nachteilig bei dieser Lösung ist allerdings, dass dies eine Mehrzahl von Anschlüssen in Wand- bzw. Bodenflächen, die den Innenraum definieren, notwendig macht, die jeweils abgedichtet sein und über eine Vielzahl von Betriebszyklen hinweg bleiben müssen, um Wärmeaustausch und Feuchtigkeitsverluste während des statischen Betriebs, also wenn kein Kondensat abgeführt und kein Druckausgleich herbeigeführt werden muss, zu vermeiden.

Die Aufgabe der Erfindung besteht daher darin, ein kombiniertes Belüftungs-,Entlüftungs- und Wasserauslassventil bereitzustellen, wodurch es möglich wird, sowohl Überdruck- als auch Unterdruckausgleich und Kondenswassermanagement über einen einzigen gemeinsamen Auslass zu gewährleisten und einen Klimaschrank mit einem solchen kombinierten Belüftungs-, Entlüftungs- und Wasserauslassventil bereitzustellen.

Diese Aufgaben werden gelöst durch ein kombiniertes Belüftungs-, Entlüftungs- und Wasserauslassventil mit den Merkmalen des Patentanspruchs 1 und durch einen Klimaschrank mit den Merkmalen des Patentanspruchs 11. Vorteilhafte Weiterbildungen der Erfindung sind Gegenstand der abhängigen Ansprüche. Die Dokumente US 2019/226715 A1, GB 2479772 A und US 2008/099083 A1 offenbaren Ventile nach dem Stand der Technik.

Das erfindungsgemäße kombiniertes Belüftungs-, Entlüftungs- und Wasserauslassventil weist insbesondere die folgenden Komponenten auf:
- einen gemeinsamen Wassereinlass, Gaseinlass und Gasauslass zum Anschluss an einen Klimaschrank. Daraus ergibt sich insbesondere unmittelbar, dass zumindest Teile des Ventils sowohl von Gas, insbesondere Luft, als auch von Wasser durchströmt werden.
- ein Wasserreservoir, mit dem der gemeinsame Wassereinlass, Gaseinlass und Gasauslass so verbunden ist, dass aus dem gemeinsamen Wassereinlass, Gaseinlass und Gasauslass in das Wasserreservoir eintretendes Wasser unter dem Einfluss der Schwerkraft in Richtung auf den Boden des Wasserreservoirs geführt wird. Dementsprechend wird also Wasser bzw. Kondensat durch den gemeinsamen Wassereinlass, Gaseinlass und Gasauslass in das Wasserreservoir eingebracht und dort (zunächst) gespeichert, so dass sich ein mit der Zeit ansteigender Wasserspiegel im Wasserreservoir bildet. Das bedeutet insbesondere, dass der gemeinsamen Wassereinlass, Gaseinlass und Gasauslass im oberen Bereich des Wasserreservoirs, vorzugsweise an dessen Decke oder an seinem oberen Rand angeordnet ist.

Da die Wirkung der Schwerkraft auf das Wasser die Triebkraft ist, mit der das Wasser durch das kombiniertes Belüftungs-, Entlüftungs- und Wasserauslassventil hindurchgeführt wird, ist seine bestimmungsgemäße Orientierung im Raum definiert und insbesondere die Identifikation seines Bodens und seiner Decke sowie der Richtungen "oben" und "unten" eindeutig möglich.
- eine in einem ersten Ventilraum angeordnete erste Ventilanordnung mit einem ersten Ventilsitz, der von einem Durchgang durchsetzt wird und mit einem ersten Schließelement, das durch eine erste Schließkraft auf den ersten Ventilsitz gedrückt wird, so dass es diesen Durchgang sperrt bis die erste Schließkraft überwunden ist, wobei der Durchgang vom ersten Schließelement direkt oder indirekt mit einem Lufteinlass verbunden ist. Indirekt ist eine derartige Verbindung, wenn eine weitere Passage, z.B. ein Schlauchstück, dazwischengeschaltet ist oder sich der Durchgang vor dem Erreichen des Lufteinlasses noch einmal aufweitet, z.B. zu einem Raum.
- eine in einem zweiten Ventilraum angeordnete zweite Ventilanordnung mit einem zweiten Ventilsitz, der von einem Durchgang durchsetzt wird und mit einem zweiten Schließelement, das durch eine zweite Schließkraft auf den zweiten Ventilsitz gedrückt wird, so dass es diesen Durchgang sperrt bis die zweite Schließkraft überwunden ist, und
- eine Ablauföffnung für Luft und Wasser, die in Höhe der Oberkante des zweiten Ventilsitzes aus dem zweiten Ventilraum heraus führt und eine direkte oder indirekte Verbindung zwischen dem zweiten Ventilraum und einem Abfluss für Luft und Wasser herstellt. Diese Ablauföffnung kann durch eine Öffnung in der Wand des zweiten Ventilraums gebildet sein und führt vorzugsweise in ein Rohr oder in ein Ablaufreservoir, aus dem jeweils das Wasser, insbesondere getrieben durch die Wirkung der Schwerkraft abfließen kann.

Dabei ist der Durchgang vom zweiten Ventilsitz direkt oder indirekt mit dem Wasserreservoir verbunden, so dass sich am Boden des Wasserreservoirs sammelndes Wasser in den zweiten Durchgang eintreten kann. Dies bedeutet insbesondere, dass die Öffnung, durch die das Wasser dann das Wasserreservoir verlässt, unterhalb des zweiten Schließelements liegt; vorzugsweise ist sie bodennah oder sogar direkt am Boden angeordnet, wobei aber eine Schwelle akzeptabel ist.

Schließlich ist oberhalb des maximalen Wasserstands des sich im Wasserreservoir sammelnden Wassers eine Verbindung zwischen dem Wasserreservoir und dem ersten Ventilraum vorhanden ist. Der maximale Wasserstand ist für ein gegebenes Belüftungs-, Entlüftungs- und Wasserauslassventil durch die Höhe der Wassersäule im Wasserreservoir vorgegeben, bei der deren Druck die zweite Schließkraft überwindet, so dass sich das zweite Schließelement öffnet. Bevorzugt liegt diese Verbindung oberhalb des ersten und/oder zweiten Schließelements; besonders bevorzugt verläuft sie deckennah, insbesondere angrenzend an die Decke des Wasserreservoirs.

Ein besonders empfindliches Ansprechverhalten und damit besonders guten Druckausgleich erreicht man mit einer Variante des kombinierten Belüftungs-, Entlüftungs- und Wasserauslassventils, bei der die erste Schließkraft und/oder die zweite Schließkraft durch die Schwerkraft gestellt werden. Durch Anpassung der Dichte des ersten und/oder zweiten Schließelements, die durch die Wahl des Materials, aus dem das jeweilige Schließelement gefertigt ist, erreicht werden kann, kann das Ansprechverhalten weiter beeinflusst werden; als günstig hat es sich erwiesen, wenn die Dichte des ersten und/oder zweiten Schließelements geringer ist als die Dichte von Wasser.

Eine besonders kostengünstig herstellbare Variante des kombinierten Belüftungs-, Entlüftungs- und Wasserauslassventils erhält man, wenn das Wassereservoir, der erste Ventilraum, der zweite Ventilraum und das Ablaufreservoir als ein zusammenhängendes Spritzgussteil realisiert sind.

Wenn an dem kombinierten Belüftungs-, Entlüftungs- und Wasserauslassventil gemäß einer bevorzugten Ausführungsform an dem gemeinsamen Wassereinlass, Gaseinlass und Gasauslass an dem Ablaufreservoir eine Schlauchtülle angeordnet ist oder wenn der gemeinsame Wassereinlass, Gaseinlass und Gasauslass und/oder das Ablaufreservoir durch eine Schlauchtülle gebildet ist, lässt es sich besonders gut anschließen.

Gemäß einer vorteilhaften Weiterbildung der Erfindung ist vorgesehen dass das erste Schließelement und das zweite Schließelement sich wenn die jeweilige Schließkraft überwunden ist in dieselbe Richtung, insbesondere nach oben, bewegen.

Besonders einfach gestaltet werden kann das kombinierte Belüftungs-, Entlüftungs- und Wasserauslassventil, wenn dass das erste Schließelement und das zweite Schließelement jeweils durch eine Kugel gebildet werden. Insbesondere können auch Dimensionen und Material der Kugeln gleich gewählt werden. Zu einem kompakten Aufbau kann es zudem beitragen, wenn beide Schließelemente auf derselben Höhe angeordnet werden.

Zu einer einfachen und kostengünstigen Ausführungsform kann es auch beitragen, wenn der erste Ventilsitz und/oder der zweite Ventilsitz durch einen Abschnitt einer ebenen Zwischenwand mit einer die Zwischenwand durchsetzenden kreiszzylinderförmigen Öffnung gebildet werden, wobei die Zylinderachse der kreiszylinderförmigen Öffnung senkrecht zur Ebene der Zwischenwand steht. Solche Strukturen lassen sich insbesondere im Spritzguss einfach herstellen.

Zu einem kompakten Aufbau des kombinierten Belüftungs-, Entlüftungs- und Wasserauslassventils kann weiter beitragen, wenn das Wasserreservoir und der erste Ventilraum durch eine Trennwand voneinander getrennt sind und wenn die Verbindung zwischen dem Wasserreservoir und dem ersten Ventilraum durch eine Öffnung in der Trennwand gebildet wird, die oberhalb des ersten Schließelements liegt und/oder wenn das Wasserreservoir und der zweite Ventilraum durch eine Trennwand voneinander getrennt sind und wenn die Verbindung zwischen dem Wasserreservoir und dem Durchgang des zweiten Ventilsitzes durch eine Öffnung in der Trennwand gebildet wird, die unterhalb des zweiten Schließelements liegt.

Vorzugsweise liegt der Lufteinlass oberhalb des Niveaus des Bodens des kombinierten Belüftungs-, Entlüftungs- und Wasserauslassventils. Insbesondere dann, wenn im Inneren des Klimaschranks ein sehr warmes und feuchtes Klima herrscht, kann es vorkommen, dass im ersten Ventilraum Feuchtigkeit auskondensiert. Öffnet sich das erste Schließelement, kann es dazu kommen, dass Kondensat durch den Durchgang durch den ersten Ventilsitz hindurch austritt. Bei einem im Boden angerordneten Lufteinlass führt dies dazu, dass das Kondensat aus diesem hinaustropft. Ist hingegen der Lufteinlass oberhalb des Niveaus des Bodens angeordnet, z.B. in einer Außenwand oder Decke des kombinierten Belüftungs-, Entlüftungs- und Wasserauslassventils, kann dies verhindert werden. Typischerweise sind die anfallenden Mengen an Kondensat hinreichend klein, dass es dann verdunsten kann.

Der erfindungsgemäße Klimaschrank hat einen durch Innenwände begrenzten Innenraum, der über eine Tür zugänglich ist, wobei eine der Innenwände den Boden des Innenraums und eine der Innenwände die Decke des Innenraums bildet. Er zeichnet sich dadurch aus, dass am Boden des Innenraums ein gemeinsamer Anschluss, vorzugsweise genau ein Anschluss, zur Belüftung, zur Entlüftung und zum Wasserauslass vorhanden ist und dass ein oben beschriebenes erfindungsgemäßes kombiniertes Belüftungs-, Entlüftungs- und Wasserauslassventil an diesen Anschluss angeschlossen ist.

Die Erfindung wird nachfolgend anhand von Figuren, die Ausführungsbeispiele darstellen, näher erläutert. Es zeigen
- Fig. 1:: Ein erstes Ausführungsbeispiel eines kombinierten Belüftungs-, Entlüftungs- und Wasserauslassventils,
- Fig. 2a:: den Zustand des kombinierten Belüftungs-, Entlüftungs- und Wasserauslassventils aus Figur 1 im Gleichgewichtszustand,
- Fig. 2b:: den Zustand des kombinierten Belüftungs-, Entlüftungs- und Wasserauslassventils aus Figur 1, wenn am gemeinsamen Wassereinlass, Gaseinlass und Gasauslass ein Überdruck anliegt,
- Fig. 2c:: den Zustand des kombinierten Belüftungs-, Entlüftungs- und Wasserauslassventils aus Figur 1, wenn am gemeinsamen Wassereinlass, Gaseinlass und Gasauslass ein Unterdruck anliegt,
- Fig. 2d:: den Zustand des kombinierten Belüftungs-, Entlüftungs- und Wasserauslassventils aus Figur 1, wenn der Wasserauslass aktiviert ist,
- Fig. 3:: ein zweites Ausführungsbeispiel eines kombinierten Belüftungs-, Entlüftungs- und Wasserauslassventils,
- Fig. 4a:: einen ersten Längsschnitt durch eine erste als Spritzgussteil realisierte Ausführungsform eines kombinierten Belüftungs-, Entlüftungs- und Wasserauslassventils,
- Fig. 4b:: einen zweiten Längsschnitt durch die erste als Spritzgussteil realisierte Ausführungsform eines kombinierten Belüftungs-, Entlüftungs- und Wasserauslassventils aud Figur 4a, und
- Fig. 5:: eine als Spritzgussteil realisierte Ausführungsform eines kombinierten Belüftungs-, Entlüftungs- und Wasserauslassventils.

Für gleiche Ausführungsformen werden nachfolgend gleiche Bezugszeichen verwendet; zur Verbesserung der Übersichtlichkeit sind aber nicht notwendigerweise in allen Darstellungen derselben Ausführungsform alle Bezugszeichen eingetragen.

Wie oben bereits erwähnt wurde, ist die Wirkung der Schwerkraft auf das Wasser die Triebkraft, mit der das Wasser durch das kombiniertes Belüftungs-, Entlüftungs- und Wasserauslassventil hindurchgeführt wird, so dass seine bestimmungsgemäße Orientierung im Raum definiert ist und insbesondere die Identifikation seines Bodens, seiner Höhe, seiner Decke sowie der Richtungen "oben" und "unten" eindeutig möglich ist.

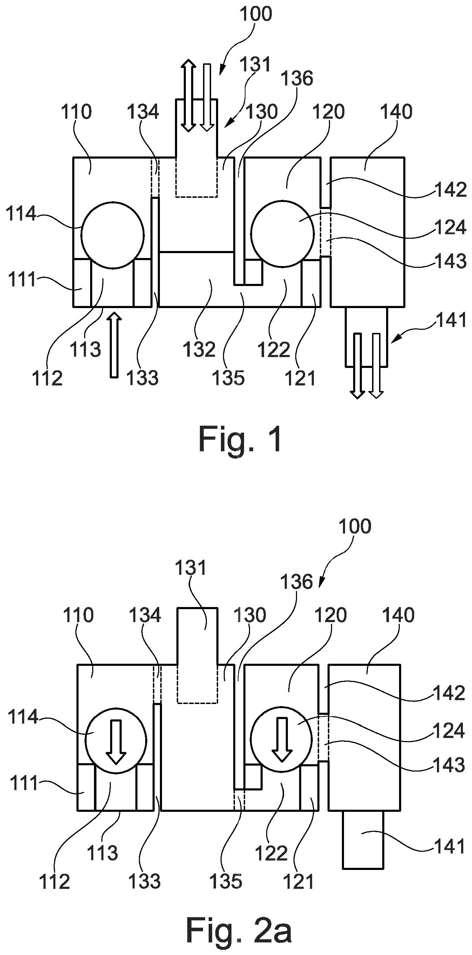

Figur 1 zeigt ein erstes Ausführungsbeispiel eines kombinierten Belüftungs-, Entlüftungs- und Wasserauslassventils 100 mit erstem Ventilraum 110, zweitem Ventilraum 120, Wasserreservoir 130 und Ablaufraum 140.

Im ersten Ventilraum 110 ist ein erster Ventilsitz 111 mit einem ersten Durchgang 112 vorhanden, der direkt zu einem Lufteinlass 113 führt. Auf dem ersten Ventilsitz 111 ruht ein als Kugel realisiertes erstes Schließelement 114, das durch die als Schließkraft wirkende Schwerkraft auf den ersten Ventilsitz 111 gedrückt wird.

Benachbart zum ersten Ventilraum 110 befindet sich ein Wasserreservoir 130, dessen Decke von einem als Schlauchtülle ausgeführten gemeinsamen Wassereinlass, Gaseinlass und Gasauslass 131 zum Anschluss an einen Klimaschrank durchsetzt wird. Am Boden des Wasserreservoirs sammelt sich Wasser 132, das durch den gemeinsamen Wassereinlass, Gaseinlass und Gasauslass 131 in das Wasserreservoir 130 gelangt.

In dem in Figur 1 dargestellten Ausführungsbeispiel ist der erste Ventilraum 110 vom Wasserreservoir 130 durch eine Trennwand 133 getrennt, wobei jedoch eine Verbindung zwischen dem Wasserreservoir 130 und dem ersten 110 Ventilraum durch eine Öffnung 134 in der Trennwand 133 gebildet wird, die oberhalb des maximalen Wasserstands des Wasserreservoirs 130 und im gezeigten Beispiel auch oberhalb des ersten Schließelements 114 liegt und sogar unmittelbar an die Decke angrenzt.

Benachbart zum Wasserreservoir 130 liegt ein zweiter Ventilraum 120, in dem ein zweiter Ventilsitz 121 mit einem zweiten Durchgang 122 angeordnet ist. Auf dem zweiten Ventilsitz 121 ruht ein als Kugel realisiertes zweites Schließelement 124, das durch die als Schließkraft wirkende Schwerkraft auf den zweiten Ventilsitz 121 gedrückt wird.

Der Durchgang 122 des zweiten Ventilsitzes 121 ist in diesem Ausführungsbeispiel direkt dem Wasserreservoir 130 verbunden, nämlich durch eine Öffnung 135 in der Trennwand 136, welche das Wasserreservoir 130 und den zweiten Ventilraum 120 voneinander trennt, so dass das sich am Boden des Wasserreservoirs 130 sammelnde Wasser 132 in den Durchgang 122 eintreten kann. Die Öffnung 135 durch die das Wasser 132 dann das Wasserreservoir 130 verlassen kann, liegt unterhalb der Höhe, auf der das zweite Schließelements liegt; insbesondere ist sie auch bodennah zum und hier sogar direkt am Boden des Wasserreservoirs 130 angeordnet, wobei aber auch eine Schwelle vorhanden sein kann.

Ferner erkennt man benachbart zum zweiten Ventilraum 120 ein Ablaufreservoir 140, aus dem das Wasser, insbesondere getrieben durch die Wirkung der Schwerkraft, aber auch Luft durch einen als Schlauchtülle realisierten Abfluss 141 für Luft und Wasser abfließen kann. In der Trennwand 142 zwischen dem zweiten Ventilraum 120 und dem weiteren Reservoir ist eine Ablauföffnung 143 für Luft und Wasser angeordnet, die in Höhe der Oberkante des zweiten Ventilsitzes 121 aus dem zweiten Ventilraum 120 heraus führt und eine indirekte Verbindung über das weitere Reservoir 140 zwischen dem zweiten Ventilraum 120 und dem als Schlauchtülle realisierten Abfluss 141 für Luft und Wasser herstellt.

Figur 2a zeigt den Zustand des kombinierten Belüftungs-, Entlüftungs- und Wasserauslassventils 100 im Gleichgewichtszustand. Auf das erste Schließelement 114 und das zweite Schließelement 124 wirkt jeweils die Schwerkraft als Schließkraft und verhindert den Durchtritt von Fluiden.

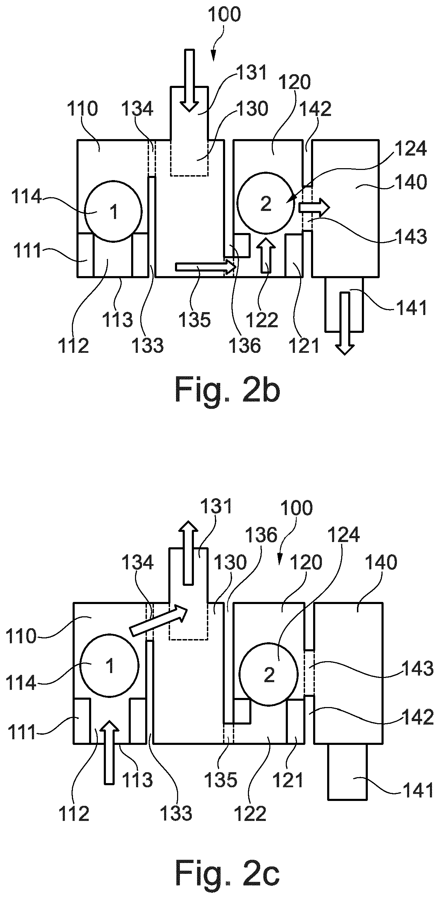

Figur 2b zeigt den Zustand des kombinierten Belüftungs-, Entlüftungs- und Wasserauslassventils 100, wenn am gemeinsamen Wassereinlass, Gaseinlass und Gasauslass 131 ein durch den Pfeil symbolisierter Überdruck anliegt. Dieser Überdruck verstärkt die auf das erste Schließelement 114 wirkenden Schließkraft, aber er arbeitet, wie durch weitere Pfeile veranschaulicht wird, gegen die auf das zweite Schließelement 124 wirkende Schließkraft und überwindet diese, wenn der Überdruck groß genug ist, so dass das als Kugel ausgeführte zweite Schließelement 124 vom Ventilsitz 121 abgehoben wird und Luft durch die Ablauföffnung 143 in das weitere Reservoir 140 strömen kann, aus dem es durch den Abfluss 141 abfließt.

Anzumerken ist, dass dieses Prinzip in fast identischer Weise funktioniert, wenn, wie in Figur 1 gezeigt, Wasser im Bodenbereich des Wasserreservoirs 130 und des Durchgangs 122 des zweiten Ventilsitzes 121 vorhanden ist. Der einzige Unterschied ist, dass es vorkommen kann, dass der durch Zustrom von Luft durch den gemeinsamen Wassereinlass, Gaseinlass und Gasauslass 131 erfolgende Druckausgleich dadurch erfolgt, dass Wasser 132 aus dem Durchgang 122 des zweiten Ventilsitzes 121 hinausgedrückt wird und nach dem Öffnen des zweiten Schließelements 124 über die Ablauföffnung 143 in das weitere Reservoir 140 strömt, aus dem es durch den Abfluss 141 abfließt.

Figur 2c zeigt den Zustand des kombinierten Belüftungs-, Entlüftungs- und Wasserauslassventils 100 aus Figur 1, wenn am gemeinsamen Wassereinlass, Gaseinlass und Gasauslass 131 ein Unterdruck anliegt, wie durch den nach oben zeigenden Pfeil symbolisiert wird. Dieser Unterdruck verstärkt die Schließkraft, die auf das zweite Schließelement 124 wirkt, aber er arbeitet gegen die Schließkraft, die auf das erste Schließelement 114 liegt und hebt das erste Schließelement 114 vom ersten Ventilsitz 111 ab, so dass Umgebungsluft durch den Lufteinlass 113 und den Durchgang 112 einströmen und den Unterdruck ausgleichen kann, wodurch sich dann das Schließelement 114 wieder absenkt.

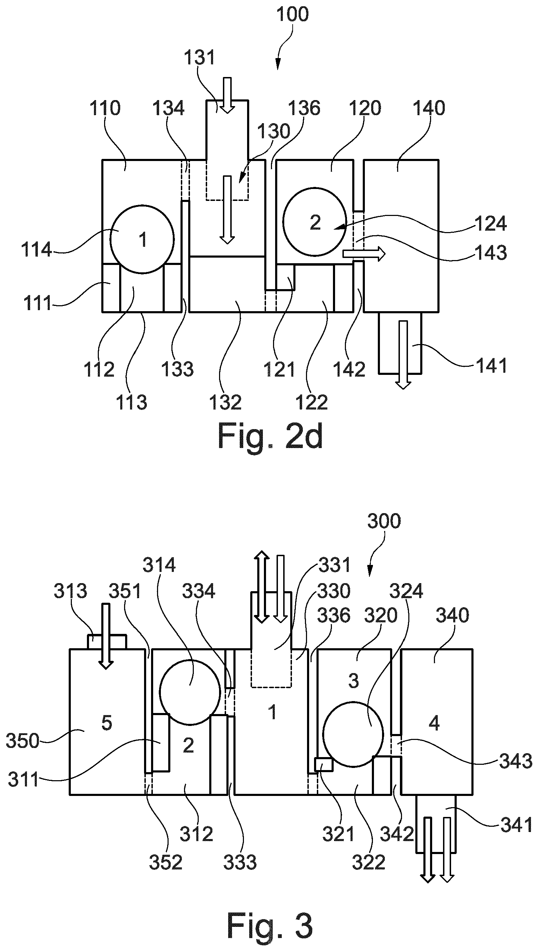

Figur 2d zeigt schließlich den Zustand des kombinierten Belüftungs-, Entlüftungs- und Wasserauslassventils 100 aus Figur 1, wenn weiteres Wasser durch den gemeinsamen Wassereinlass, Gaseinlass und Gasauslass 131 in das Wasserreservoir 130 einströmt, so dass der Wasserauslass aktiviert wird. Das weitere einströmende Wasser erhöht den Wasserspiegel des am Boden des Wasserreservoirs 130 stehenden Wassers 132 und damit den durch die Wassersäule erzeugten Druck auf den Boden des zweiten Schließelements 124, bis dieser schließlich die hier von der Schwerkraft gestellte Schließkraft überwindet und das zweite Schließelement 124 aus dem zweiten Ventilsitz 121 hebt, so dass so dass Wasser über die Ablauföffnung 143 in das weitere Reservoir 140 strömt, aus dem es durch den Abfluss 141 abfließt, wodurch der Wasserspiegel des Wassers 132 im Wasserreservoir 130 verringert, so dass sich das Schließelement 124 wieder absenkt.

Figur 3 zeigt ein zweites Ausführungsbeispiel eines kombinierten Belüftungs-, Entlüftungs- und Wasserauslassventils 300 mit
- einem ersten Ventilraum 310, in dem ein erster Ventilsitz 311 mit einem ersten Durchgang 312 indirekt durch ein Lufteinlassreservoir 350, das durch eine Wand 351 vom ersten Ventilraum 310 abgegrenzt ist, zu einem an der Decke des kombinierten Belüftungs-, Entlüftungs- und Wasserauslassventils 300 vorgesehenen Lufteinlass 313 führt, und einem als Kugel realisierten ersten Schließelement 314, das durch die als Schließkraft wirkende Schwerkraft auf den ersten Ventilsitz 311 gedrückt wird,
- einem Wasserreservoir 330, dessen Decke von einem als Schlauchtülle ausgeführten gemeinsamen Wassereinlass, Gaseinlass und Gasauslass 331 zum Anschluss an einen Klimaschrank durchsetzt wird,
- einem zweiten Ventilraum 320, in dem ein zweiter Ventilsitz 321 mit einem zweiten Durchgang 322 angeordnet ist, wobei auf dem zweiten Ventilsitz 321 ein als Kugel realisiertes zweites Schließelement 324 ruht, das durch die als Schließkraft wirkende Schwerkraft auf den zweiten Ventilsitz 321 gedrückt wird, und
- einem weiteren Reservoir 340, aus dem das Wasser, insbesondere getrieben durch die Wirkung der Schwerkraft, aber auch Luft durch einen als Schlauchtülle realisierten Abfluss 341 für Luft und Wasser abfließen kann.

Erster Ventilraum 330, Wasserreservoir 330, zweiter Ventilraum 320 Ablaufreservoir 340 und Lufteinlassreservoir 350 sind dabei jeweils durch Trennwände 333, 336, 342, 351 voneinander separiert, in denen zur Schaffung der nötigen Verbindungen Öffnungen 334, 335, 352 bzw. die Ablauföffnung 343 vorgesehen sind.

Der Unterschied zum kombinierten Belüftungs-, Entlüftungs- und Wasserauslassventils 100 aus den Figuren 1 und 2a bis 2d besteht lediglich in dem zusätzlichen Lufteinlassreservoir 350, das es erlaubt, den Lufteinlass 313 oberhalb des Niveaus des Bodens des kombinierten Belüftungs-, Entlüftungs- und Wasserauslassventils 300 anzuordnen und so den Austritt von Kondensat aus dem Lufteinlass 313 zu verhindern. Ansonsten sind Aufbau und Funktion identisch, so dass für weitere Details und für die Beschreibung der Funktionsweise auf die Figuren 1 und 2a bis 2d verwiesen werden kann, wobei man um die Beschreibung auf die Figur 3 zu übertragen die Bezugszeichen jeweils um zweihundert erhöhen muss.

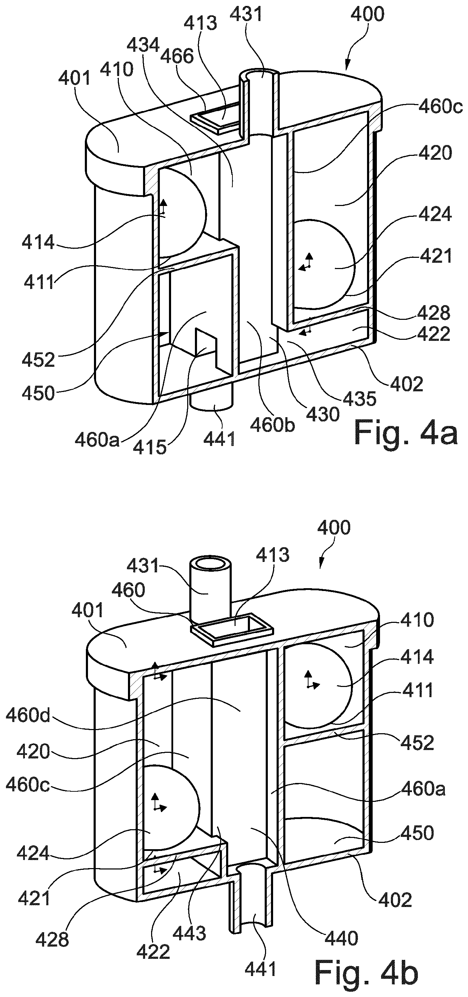

Die Figuren 4a und 4b zeigen zwei Längsschnitte durch eine erste als Spritzgussteil realisierte Ausführungsform eines kombinierten Belüftungs-, Entlüftungs- und Wasserauslassventils 400, bei denen jeweils eine der beiden Längswände entfernt ist, so dass das kombinierte Belüftungs-, Entlüftungs- und Wasserauslassventils 400 jeweils mit reduzierter Breite in der senkrecht zur Höhe und zur Längsrichtung verlaufenden Querrichtung abgebildet ist und ein Blick auf den Innenaufbau des kombinierten Belüftungs-, Entlüftungs- und Wasserauslassventils 400 möglich ist.

Bei dem kombinierten Belüftungs-, Entlüftungs und Wasserauslassventil 400 wird der Lufteinlass 413 durch einen zentral angeordneten Schacht 460 mit Schachtwänden 460a,450b,460c,460d gebildet, die zusammen einen rechteckigen Querschnitt definieren.

Zu beachten ist dabei, dass die in Querrichtung angeordneten Schachtwände 460a und 460 c über die Ausdehnung des Schachts 460 in Querrichtung hinaus mit Ausnahme der Bereiche der so gebildeten Öffnungen 434,435 und 443 bis zu den Längswänden des kombinierten Belüftungs-, Entlüftungs und Wasserauslassventils 400 verlängert sind und dadurch Trennwände zwischen unterschiedlichen Räumen des kombinierten Belüftungs-, Entlüftungs und Wasserauslassventils 400 bilden.

Der Schacht erstreckt sich ausgehend von der Decke 401 bis zum Boden 400 des kombinierten Belüftungs-, Entlüftungs und Wasserauslassventil 400 und kommuniziert durch eine in Bodennähe angeordnete Öffnung 415 mit einem Lufteinlassreservoir 450. Die Decke 452 des Lufteinlassreservoirs 450 weist eine kreisförmige Öffnung als Durchgang auf, die zugleich als Ventilsitz 411 für das erste Schließelement 414 dient, durch welches das Lufteinlassreservoir 450 und der erste Ventilraum 410 voneinander getrennt werden.

Wie bereits erwähnt, ist im Bereich des Lufteinlassreservoirs 450 ist die Wand des Schachts, in der die Öffnung 415 angeordnet ist, bis zu den Seitenwänden des kombinierten Belüftungs-, Entlüftungs und Wasserauslassventil 400 verlängert und mit diesen verbunden. Im Gegensatz dazu ist, wie die Zusammenschau der Figuren 4a und 4b zeigt, diese Wand des Schachts im Bereich des ersten Ventilraums 410 nur bis zu einer der Seitenwände des kombinierten Belüftungs-, Entlüftungs und Wasserauslassventil 400 verlängert und mit dieser verbunden, so dass eine Öffnung 434 entsteht, welche eine Verbindung zum Wasserreservoir 430 herstellt.

Das Wasserreservoir 430 grenzt auf der in Figur 4a dem Betrachter zugewandten Seite an den Schacht an, so dass seine Rückwand durch den Schacht, genauer die Schachtwand 460b gebildet wird und seine Seitenwände durch die bis zur in Figur 4a entfernten Längswand verlängerten Abschnitte der Schachtwände 460a und 460c gebildet werden.

Im Bereich der Decke des Wasserreservoirs 430 ist ein als Schlauchtülle ausgestalteter gemeinsamer Wassereinlass, Gaseinlass und Gasauslass 431 vorhanden. Wenn Unterdruck im Klimaschrank herrscht, ist dies wegen der Verbindung über das Wasserreservoir 430 und die Öffnung 434 auch im ersten Ventilraum der Fall. Das erste Schließelement 421 öffnet wegen der Druckdifferenz zum Umgebungsdruck, der im über den Schacht 460 und die Öffnung 415 mit der Außenwelt verbundenen Lufteinlassreservoir 450 herrscht, und ein Druckausgleich wird herbeigeführt.

Wasser, das durch diesen gemeinsamen Wassereinlass, Gaseinlass und Gasauslass 431 in das Wasserreservoir 430 eintritt, sammelt sich an dessen Boden und breitet sich durch die Öffnung 435 in den Durchgang 422 aus. Oberhalb des Durchgangs 422 verläuft die Zwischenwand 428, in der eine Öffnung den zweiten Ventilsitz 421 bildet, auf dem das zweite Schließelement 424 ruht, das in geschlossenem Zustand den Durchgang vom zweiten Ventilraum 420 trennt. Steigt der Wasserstand im Wasserreservoir 430 oder bei Überdruck im Klimaschrank der Luftdruck im Wasserreservoir 430 hinreichend stark, wird die das zweite Schließelement 424 auf den zweiten Ventilsitz 421 drückende Schwerkraft überwunden, das zweite Schließelement 424 öffnet und Wasser und/oder Luft gelangt in den zweiten Ventilraum 420, bis der Druck wieder so weit abgesunken ist, dass das zweite Schließelement 424 wieder schließt.

Der zweite Ventilraum 420 ist über die Öffnung 443, die sich von der Decke bis zur Höhe der Zwischenwand 428 erstreckt, mit dem weiteren Reservoir 440 verbunden, dessen Wände von den in Richtung auf die in Figur 4b nicht dargestellte Längswand des kombinierten Belüftungs-, Entlüftungs und Wasserauslassventil 400 verlängerten Abschnitten der Schachtseiten 460a und 460c, dieser Längswand selbst und der Schachtseite 460d gebildet werden. Weil die Öffnung 443 bis zur Höhe der Zwischenwand 428 erstreckt, kann das in den zweiten Ventilraum 420 eingetretene Wasser unmittelbar in das weitere Reservoir 440 abfließen, von wo es durch die im Boden angeordneten, als Schlauchtülle ausgestalteten Abfluss für Luft und Wasser 441 abfließt.

Offensichtlich kann das kombinierte Belüftungs-, Entlüftungs- und Wasserauslassventil 400 gemäß Figur 4a und 4b sehr einfach durch ein Gehäuse mit darin eingefügten Trennwänden und Öffnungen realisiert werden kann, das mit Spritzgusstechniken sehr einfach herstellbar ist.

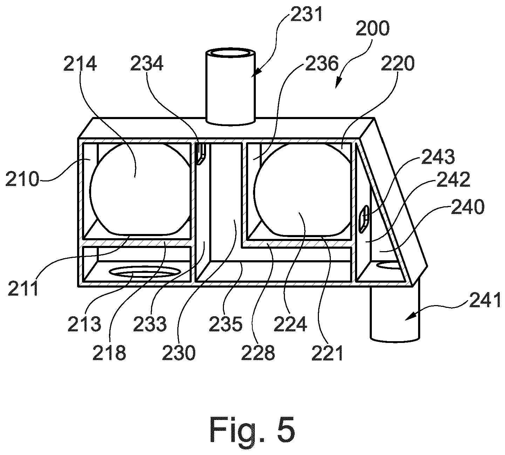

Figur 5 zeigt eine zweite als Spritzgussteil realisierte Ausführungsform eines kombinierten Belüftungs-, Entlüftungs- und Wasserauslassventils 200 mit
- einem ersten Ventilraum 210, in dem ein erster Ventilsitz 211 mit einem in der Figur 3 nicht erkennbaren ersten Durchgang indirekt zu einem Lufteinlass 213 führt, und einem als Kugel realisierten ersten Schließelement 214, das durch die als Schließkraft wirkende Schwerkraft auf den ersten Ventilsitz 211 gedrückt wird,
- einem Wasserreservoir 230, dessen Decke von einem als Schlauchtülle ausgeführten gemeinsamen Wassereinlass, Gaseinlass und Gasauslass 231 zum Anschluss an einen Klimaschrank durchsetzt wird,
- einem zweiten Ventilraum 220, in dem ein zweiter Ventilsitz 221 mit einem zweiten Durchgang angeordnet ist, der in Figur 5 nicht erkennbar ist, wobei auf dem zweiten Ventilsitz 221 ein als Kugel realisiertes zweites Schließelement 224 ruht, das durch die als Schließkraft wirkende Schwerkraft auf den zweiten Ventilsitz 221 gedrückt wird, und
- einem weiteren Reservoir 240, aus dem das Wasser, insbesondere getrieben durch die Wirkung der Schwerkraft, aber auch Luft durch einen als Schlauchtülle realisierten Abfluss 241 für Luft und Wasser abfließen kann.

Erster Ventilraum 210, Wasserreservoir 230, zweiter Ventilraum 220 und Ablaufreservoir 240 sind dabei jeweils durch Trennwände 233, 236, 242 voneinander separiert, in denen zur Schaffung der nötigen Verbindungen Öffnungen 234, 235 bzw. die Ablauföffnung 243 vorgesehen sind.

Das kombinierte Belüftungs-, Entlüftungs- und Wasserauslassventil 200 gemäß Figur 5 zeichnet sich ferner dadurch aus, dass der erste Ventilsitz 211 und der zweite Ventilsitz 221 durch einen Abschnitt einer ebenen Zwischenwand 218, 228 mit einer die Zwischenwand 218,228 durchsetzenden kreiszzylinderförmigen Öffnung, deren Zylinderachse senkrecht zur Ebene der Zwischenwand 218, 228 steht, gebildet werden.

Dies zeigt, dass auch das kombinierte Belüftungs-, Entlüftungs- und Wasserauslassventil 200 gemäß Figur 5 sehr einfach durch ein Gehäuse mit darin eingefügten Trennwänden und Öffnungen realisiert werden kann, das mit Spritzgusstechniken sehr einfach herstellbar ist.

### Bezugszeichenliste

- 100, 200, 300, 400: Kombiniertes Belüftungs-, Entlüftungs- und Wasserauslassventil
- 110, 210, 310, 410: erster Ventilraum
- 111, 211, 311, 411: erster Ventilsitz
- 112, 312: Durchgang
- 113, 213, 313, 413: Lufteinlass
- 114, 214, 314, 414: erstes Schließelement
- 120, 220, 320, 420: zweiter Ventilraum
- 121, 221, 321, 421: zweiter Ventilsitz
- 122, 322, 422: Durchgang
- 124, 224, 324, 424: zweites Schließelement
- 130, 230, 330, 430: Wasserreservoir
- 131, 231, 331, 431: gemeinsamer Wassereinlass, Gaseinlass und Gasauslass
- 132: Wasser
- 133, 233, 333: Trennwand
- 134, 234, 334, 434: Öffnung
- 135, 235, 335, 435: Öffnung
- 136, 236, 336: Trennwand
- 140, 240, 340, 440: Ablaufreservoir
- 141, 241, 341, 441: Abfluss für Luft und Wasser
- 142, 242: Trennwand
- 143, 243, 343, 443: Ablauföffnung
- 218, 228, 428, 452: Zwischenwand
- 460a, 460b, 460c, 460d: Schachtwand

## Patentansprüche

1. Kombiniertes Belüftungs-, Entlüftungs- und Wasserauslassventil (100, 200, 300, 400), das aufweist:
- einen gemeinsamen Wassereinlass, Gaseinlass und Gasauslass (131, 231, 331, 431) zum Anschluss an einen Klimaschrank,
- ein Wasserreservoir (130, 230, 330, 430), mit dem der gemeinsame Wassereinlass, Gaseinlass und Gasauslass (131, 231, 331, 431) so verbunden ist, dass aus dem gemeinsamen Wassereinlass , Gaseinlass und Gasauslass (131, 231, 331, 431) in das Wasserreservoir (130, 230, 330, 430) eintretendes Wasser (132) unter dem Einfluss der Schwerkraft in Richtung auf den Boden des Wasserreservoirs (130, 230, 330, 430) geführt wird,
- eine in einem ersten Ventilraum (110, 210, 310, 410) angeordnete erste Ventilanordnung mit einem ersten Ventilsitz (111, 211, 311, 411), der von einem Durchgang (112, 312) durchsetzt wird und mit einem ersten Schließelement (114, 214, 314, 414), das durch eine erste Schließkraft auf den ersten Ventilsitz (111, 211, 311, 411) gedrückt wird, so dass es den Durchgang (112, 312) sperrt, bis die erste Schließkraft überwunden ist, wobei der Durchgang (112, 312) vom ersten Schließelement (114, 214, 314, 414) direkt oder indirekt zu einem Lufteinlass (113, 213, 313, 413) führt
- eine in einem zweiten Ventilraum (120, 220, 320, 420) angeordnete zweite Ventilanordnung mit einem zweiten Ventilsitz (121, 221, 321, 421), der von einem Durchgang (122, 322, 422) durchsetzt wird und mit einem zweiten Schließelement (124, 224, 324, 424), das durch eine zweite Schließkraft auf den zweiten Ventilsitz (121, 221, 321, 421) gedrückt wird, so dass es den Durchgang (122, 322, 422) sperrt, bis die zweite Schließkraft überwunden ist, und
- eine Ablauföffnung (143, 243, 343, 443) für Luft und Wasser, die in Höhe der Oberkante des zweiten Ventilsitzes (121, 221, 321, 421) angeordnet ist und eine direkte oder indirekte Verbindung zwischen dem zweiten Ventilraum (120, 220, 320, 420) und einem Abfluss (141, 241, 341, 441) für Luft und Wasser herstellt,
wobei der Durchgang (122, 322, 422) des zweiten Ventilsitzes (121, 221, 321, 421) direkt oder indirekt mit dem Wasserreservoir (130, 230, 330, 430) verbunden ist, so dass sich am Boden des Wasserreservoirs (130, 230, 330, 430) sammelndes Wasser (132) in den Durchgang (122, 322, 422) eintreten kann, und
wobei oberhalb des maximalen Wasserstands des sich im Wasserreservoir (130, 230, 330, 430) sammelnden Wassers (132) eine direkte oder indirekte Verbindung zwischen dem Wasserreservoir (130, 230, 330, 430) und dem ersten Ventilraum (110, 210, 310, 410) vorhanden ist.

2. Kombiniertes Belüftungs-, Entlüftungs- und Wasserauslassventil (100, 200, 300, 400) nach Anspruch 1,
wobei die erste Schließkraft und/oder die zweite Schließkraft durch die Schwerkraft gestellt werden.

3. Kombiniertes Belüftungs-, Entlüftungs- und Wasserauslassventil (100, 200, 300, 400) nach Anspruch 1 oder 2,
wobei das Wasserreservoir (130, 230, 330, 430), der erste Ventilraum (110, 210, 310, 410), der zweite Ventilraum (120, 220, 320, 420) und ein Ablaufreservoir (140, 240, 340, 440) als ein zusammenhängendes Spritzgussteil realisiert sind.

4. Kombiniertes Belüftungs-, Entlüftungs- und Wasserauslassventil (100, 200, 300, 400) nach einem der Ansprüche 1 bis 3,
wobei an dem gemeinsamen Wassereinlass, Gaseinlass und Gasauslass (131, 231, 331, 431) und/oder an dem Ablaufreservoir (140, 240, 340, 440) eine Schlauchtülle angeordnet ist oder der gemeinsame Wassereinlass, Gaseinlass und Gasauslass (131, 231, 331, 431) und/oder das Ablaufreservoir (140, 240, 340, 440) durch eine Schlauchtülle gebildet ist.

5. Kombiniertes Belüftungs-, Entlüftungs- und Wasserauslassventil (100, 200, 300, 400) nach einem der Ansprüche 1 bis 4,
wobei das erste Schließelement (114, 214, 314, 414) und das zweite Schließelement (124, 224, 324, 424) sich, wenn die jeweilige Schließkraft überwunden ist, in dieselbe Richtung bewegen.

6. Kombiniertes Belüftungs-, Entlüftungs- und Wasserauslassventil (100, 200, 300, 400) nach einem der Ansprüche 1 bis 5,
wobei das erste Schließelement (114, 214, 314, 414) und das zweite Schließelement (124, 224, 324, 424) jeweils durch eine Kugel gebildet werden.

7. Kombiniertes Belüftungs-, Entlüftungs- und Wasserauslassventil (100, 200, 300, 400) nach einem der Ansprüche 1 bis 6,
wobei der erste Ventilsitz (111, 211, 311, 411) und/oder der zweite Ventilsitz (121, 221, 321, 421) durch einen Abschnitt einer ebenen Zwischenwand (218, 228, 452, 428) mit einer die Zwischenwand (218, 228, 452, 428) durchsetzenden kreiszylinderförmigen Öffnung gebildet werden, wobei die Zylinderachse der kreiszylinderförmigen Öffnung senkrecht zur Ebene der Zwischenwand (218, 228, 452, 428) steht.

8. Kombiniertes Belüftungs-, Entlüftungs- und Wasserauslassventil (100, 200, 300, 400) nach einem der Ansprüche 1 bis 7,
wobei das Wasserreservoir (130, 230, 330, 430) und der erste Ventilraum (110, 210, 310, 410) durch eine Trennwand (133, 233, 333) voneinander getrennt sind und wobei die Verbindung zwischen dem Wasserreservoir (130, 230, 330, 430) und dem ersten Ventilraum (110, 210, 310, 410) durch eine Öffnung (134, 234, 334, 434) in der Trennwand (133, 233, 333) gebildet wird, die oberhalb der Höhe des ersten Schließelements (114, 214, 314, 414) liegt.

9. Kombiniertes Belüftungs-, Entlüftungs- und Wasserauslassventil (100, 200, 300, 400) nach einem der Ansprüche 1 bis 8,
wobei das Wasserreservoir (130, 230, 330, 430) und der zweite Ventilraum (120, 220, 320, 420) durch eine Trennwand (136, 236, 336) voneinander getrennt sind und wobei die Verbindung zwischen dem Wasserrevoir (130, 230, 330, 430) und dem Durchgang (122, 322, 422) des zweiten Ventilsitzes (121, 221, 321, 421) durch eine Öffnung (135, 235, 335, 435) in der Trennwand (136, 236, 336) gebildet wird, die unterhalb der Höhe des zweiten Schließelements (124, 224, 324, 424) liegt.

10. Kombiniertes Belüftungs-, Entlüftungs- und Wasserauslassventil (100, 200, 300, 400) nach einem der Ansprüche 1 bis 9,
wobei der Lufteinlass (113, 213, 313, 413) oberhalb des Niveaus des Bodens angeordnet ist.

11. Klimaschrank mit einem durch Innenwände begrenzten Innenraum, der über eine Tür zugänglich ist, wobei eine der Innenwände den Boden des Innenraums und eine der Innenwände die Decke des Innenraums bildet,
wobei am Boden des Innenraums ein gemeinsamer Anschluss, vorzugsweise genau ein Anschluss zur Belüftung, zur Entlüftung und zum Wasserauslass vorhanden ist und wobei ein kombiniertes Belüftungs-, Entlüftungs- und Wasserauslassventil (100, 200, 300, 400) nach einem der Ansprüche 1 bis 10 an diesen Anschluss angeschlossen ist.

## Claims

1. Combined ventilation, venting and water discharge valve (100, 200, 300, 400), comprising:
- a common water inlet, gas inlet and gas outlet (131, 231, 331, 431) for connection to a climate chamber,
- a water reservoir (130, 230, 330, 430), which is connected to the common water inlet, gas inlet and gas outlet (131, 231, 331, 431) in such a way that water (132) entering the water reservoir (130, 230, 330, 430) from the common water inlet, gas inlet and gas outlet (131, 231, 331, 431) is guided under the influence of gravity toward the bottom of the water reservoir (130, 230, 330, 430),
- a first valve assembly arranged in a first valve chamber (110, 210, 310, 410), having a first valve seat (111, 211, 311, 411), which is penetrated by a passage (112, 312), and having a first closing element (114, 214, 314, 414), which is pressed onto the first valve seat (111, 211, 311, 411) by a first closing force so as to block the passage (112, 312) until the first closing force is overcome, wherein the passage (112, 312) leads directly or indirectly from the first closing element (114, 214, 314, 414) to an air inlet (113, 213, 313, 413),
- a second valve assembly arranged in a second valve chamber (120, 220, 320, 420), having a second valve seat (121, 221, 321, 421), which is penetrated by a passage (122, 322, 422), and having a second closing element (124, 224, 324, 424), which is pressed onto the second valve seat (121, 221, 321, 421) by a second closing force so as to block the passage (122, 322, 422) until the second closing force is overcome, and
- a discharge opening (143, 243, 343, 443) for air and water, which is arranged at the height of the upper edge of the second valve seat (121, 221, 321, 421) and establishes a direct or indirect connection between the second valve chamber (120, 220, 320, 420) and a drain (141, 241, 341, 441) for air and water,
wherein the passage (122, 322, 422) of the second valve seat (121, 221, 321, 421) is directly or indirectly connected to the water reservoir (130, 230, 330, 430) such that water (132) collecting at the bottom of the water reservoir (130, 230, 330, 430) can enter the passage (122, 322, 422), and
wherein, above the maximum water level of the water (132) collecting in the water reservoir (130, 230, 330, 430), a direct or indirect connection is present between the water reservoir (130, 230, 330, 430) and the first valve chamber (110, 210, 310, 410).

2. Combined ventilation, venting and water discharge valve (100, 200, 300, 400) according to claim 1, wherein the first closing force and/or the second closing force is provided by gravity.

3. Combined ventilation, venting and water discharge valve (100, 200, 300, 400) according to claim 1 or 2, wherein the water reservoir (130, 230, 330, 430), the first valve chamber (110, 210, 310, 410), the second valve chamber (120, 220, 320, 420), and a discharge reservoir (140, 240, 340, 440) are realized as a single, integral injection-molded part.

4. Combined ventilation, venting and water discharge valve (100, 200, 300, 400) according to one of claims 1 to 3, wherein a hose nipple is arranged at the common water inlet, gas inlet and gas outlet (131, 231, 331, 431) and/or at the discharge reservoir (140, 240, 340, 440), or wherein the common water inlet, gas inlet and gas outlet (131, 231, 331, 431) and/or the discharge reservoir (140, 240, 340, 440) is formed by a hose nipple.

5. Combined ventilation, venting and water discharge valve (100, 200, 300, 400) according to one of claims 1 to 4, wherein the first closing element (114, 214, 314, 414) and the second closing element (124, 224, 324, 424) move in the same direction when the respective closing force is overcome.

6. Combined ventilation, venting and water discharge valve (100, 200, 300, 400) according to one of claims 1 to 5, wherein the first closing element (114, 214, 314, 414) and the second closing element (124, 224, 324, 424) are each formed by a ball.

7. Combined ventilation, venting and water discharge valve (100, 200, 300, 400) according to one of claims 1 to 6, wherein the first valve seat (111, 211, 311, 411) and/or the second valve seat (121, 221, 321, 421) is formed by a section of a planar intermediate wall (218, 228, 452, 428) having a circular-cylindrical opening penetrating the intermediate wall (218, 228, 452, 428), wherein the cylinder axis of the circular-cylindrical opening is perpendicular to the plane of the intermediate wall (218, 228, 452, 428).

8. Combined ventilation, venting and water discharge valve (100, 200, 300, 400) according to one of claims 1 to 7, wherein the water reservoir (130, 230, 330, 430) and the first valve chamber (110, 210, 310, 410) are separated from one another by a partition wall (133, 233, 333), and wherein the connection between the water reservoir (130, 230, 330, 430) and the first valve chamber (110, 210, 310, 410) is formed by an opening (134, 234, 334, 434) in the partition wall (133, 233, 333), which opening is located above the height of the first closing element (114, 214, 314, 414).

9. Combined ventilation, venting and water discharge valve (100, 200, 300, 400) according to one of claims 1 to 8, wherein the water reservoir (130, 230, 330, 430) and the second valve chamber (120, 220, 320, 420) are separated from one another by a partition wall (136, 236, 336), and wherein the connection between the water reservoir (130, 230, 330, 430) and the passage (122, 322, 422) of the second valve seat (121, 221, 321, 421) is formed by an opening (135, 235, 335, 435) in the partition wall (136, 236, 336), which opening is located below the height of the second closing element (124, 224, 324, 424).

10. Combined ventilation, venting and water discharge valve (100, 200, 300, 400) according to one of claims 1 to 9, wherein the air inlet (113, 213, 313, 413) is arranged above the level of the bottom.

11. Climate chamber having an interior space bounded by interior walls, which is accessible via a door, wherein one of the interior walls forms the bottom of the interior space and one of the interior walls forms the ceiling of the interior space, wherein a common connection, preferably exactly one connection, for ventilation, venting and water discharge is present at the bottom of the interior space, and wherein a combined ventilation, venting and water discharge valve (100, 200, 300, 400) according to one of claims 1 to 10 is connected to this connection.

## Revendications

1. Soupape (100, 200, 300, 400) combinée de ventilation, de ventilation et de sortie d'eau, qui a :
- une entrée d'eau commune, une entrée de gaz et une sortie (131, 231, 331, 431) de gaz de raccordement à une armoire de conditionnement d'air,
- un réservoir (130, 230, 330, 430) d'eau, avec lequel l'entrée d'eau commune, l'entrée de gaz et la sortie (131, 231, 331, 431) de gaz communiquent de manière à ce que de l'eau (132), entrant dans le réservoir (130, 230, 330, 430) d'eau à partir de l'entrée d'eau commune, de l'entrée de gaz et de la sortie (131, 231, 331, 431), soit conduite sous l'influence de la force de la gravité en direction du fond du réservoir (130, 230, 330, 430) d'eau,
- un premier agencement de soupape disposé dans un premier espace (110, 210, 310, 410) de soupape et ayant un premier siège (111, 211, 311, 411) de soupape, qui est traversé par un passage (112, 312), et ayant un premier élément (114, 214, 314, 414) de fermeture, qui est poussé par une première force de fermeture sur le premier siège (111, 211, 311, 411) de soupape, de manière à barrer le passage (112, 312) jusqu'à ce que la première force de fermeture soit surmontée, dans lequel le passage (112, 312) conduit du premier élément (114, 214, 314, 414) de fermeture directement ou indirectement à une entrée (113, 213, 313, 413) d'air,
- un deuxième agencement de soupape disposé dans un deuxième espace (120, 220, 320, 420) de soupape et ayant un deuxième siège (121, 221, 321, 421) de soupape, qui est traversé par un passage (122, 322, 422) et comprenant un deuxième élément (124, 224, 324, 424) de fermeture, qui est poussé par une deuxième force de fermeture sur le deuxième siège (121, 221, 321, 421) de soupape, de manière à barrer le passage (122, 322, 422) jusqu'à ce que la deuxième force de fermeture soit surmontée, et
- une ouverture (143, 243, 343, 443) d'évacuation d'air et d'eau, qui est disposée au niveau du bord supérieur du deuxième siège (121, 221, 321, 421) de soupape et ménage une communication directe ou indirecte entre le deuxième espace (120, 220, 320, 420) de soupape et une évacuation (141, 241, 341, 441) d'air et d'eau,
dans laquelle, le passage (122, 322, 422) du deuxième siège (121, 221, 321, 421) de soupape communique directement ou indirectement avec le réservoir (130, 230, 330, 430) d'eau, de manière à ce que de l'eau (132) s'accumulant au fond du réservoir (130, 230, 330, 430) d'eau puisse entrer dans le passage (122, 322, 422), et
dans laquelle au-dessus du niveau maximum de l'eau (132), s'accumulant dans le réservoir (130, 230, 330, 430) d'eau, il y a une communication directe ou indirecte entre le réservoir (130, 230, 330, 430) d'eau et le premier espace (110, 210, 310, 410) de soupape.

2. Soupape (100, 200, 300, 400) combinée de ventilation, de ventilation et de sortie d'eau, suivant la revendication 1, dans laquelle la première force de fermeture et/ou la deuxième force de fermeture est réglée par la force de la gravité.

3. Soupape (100, 200, 300, 400) combinée de ventilation, de ventilation et de sortie d'eau, suivant la revendication 1 ou 2,
dans laquelle le réservoir (130, 230, 330, 430) d'eau, le premier espace (110, 210, 310, 410) de soupape, le deuxième espace (120, 220, 320, 420) de soupape et un réservoir (140, 240, 340, 440) d'évacuation sont réalisés sous la forme d'une pièce moulée par injection d'un seul tenant.

4. Soupape (100, 200, 300, 400) combinée de ventilation, de ventilation et de sortie d'eau, suivant la revendication 1 à 3,
dans laquelle, sur l'entrée d'eau commune, l'entrée de gaz et la sortie (131, 231, 331, 431) de gaz et/ou sur le réservoir (140, 240, 340, 440) d'évacuation est monté un bec en tuyau souple ou l'entrée d'eau commune, l'entrée de gaz et la sortie (131, 231, 331, 431) de gaz et/ou le réservoir (140, 240, 340, 440) d'évacuation sont formés d'un bec en tuyau souple.

5. Soupape (100, 200, 300, 400) combinée de ventilation, de ventilation et de sortie d'eau, suivant l'une des revendications 1 à 4,
dans laquelle le premier élément (114, 214, 314, 414) de fermeture et le deuxième élément (124, 224, 324, 424) de fermeture se déplacent dans le même sens lorsque la force de fermeture respective est surmontée.

6. Soupape (100, 200, 300, 400) combinée de ventilation, de ventilation et de sortie d'eau, suivant l'une des revendications 1 à 5,
dans laquelle le premier élément (114, 214, 314, 414) de fermeture et le deuxième élément (124, 224, 324, 424) sont formés respectivement par une bille.

7. Soupape (100, 200, 300, 400) combinée de ventilation, de ventilation et de sortie d'eau, suivant l'une des revendications 1 à 6,
dans laquelle le premier siège (111, 211, 311, 411) de soupape et le deuxième siège (121, 221, 321, 421) de soupape sont formés par une partie d'une paroi (218, 228, 452, 428) intermédiaire, plane ayant une ouverture de forme cylindrique traversant la paroi (218, 228, 452, 428) intermédiaire, dans laquelle l'axe de cylindre de l'ouverture en forme de cylindre de section droite circulaire est perpendiculaire au plan de la paroi (218, 228, 452, 428) intermédiaire.

8. Soupape (100, 200, 300, 400) combinée de ventilation, de ventilation et de sortie d'eau, suivant l'une des revendications 1 à 7,
dans laquelle le réservoir (130, 230, 330, 430) d'eau et le premier espace (110, 210, 310, 410) de soupape sont séparés l'un de l'autre par une cloison (133, 233, 333) et dans laquelle la communication entre le réservoir (130, 230, 330, 430) d'eau et le premier espace (110, 210, 310, 410) de soupape est formée par une ouverture (134, 234, 334, 434) dans la cloison (133, 233, 333), l'ouverture se trouvant au-dessus du niveau du premier élément (114, 214, 314, 414) de fermeture.

9. Soupape (100, 200, 300, 400) combinée de ventilation, de ventilation et de sortie d'eau, suivant l'une des revendications 1 à 8,
dans laquelle le réservoir (130, 230, 330, 430) d'eau et le deuxième espace (120, 220, 320, 420) de soupape sont séparés l'un de l'autre par une cloison (136, 236, 336) et dans laquelle la communication entre le réservoir (130, 230, 330, 430) d'eau et le passage (122, 322, 422) du deuxième siège (121, 221, 321, 421) de soupape est formée par une ouverture (135, 235, 335, 435) dans la cloison (136, 236, 336), ouverture qui est en dessous du niveau du deuxième élément (124, 224, 324, 424) de fermeture.

10. Soupape (100, 200, 300, 400) combinée de ventilation, de ventilation et de sortie d'eau, suivant l'une des revendications 1 à 9,
dans laquelle l'entrée (113, 213, 313, 413) d'air est disposée au-dessus du niveau du fond.

11. Armoire de conditionnement d'air comprenant un espace intérieur, qui est délimité par des parois intérieures et qui est accessible par une porte,
dans laquelle l'une des parois intérieures forme le fond de l'espace intérieur et l'une des parois intérieures le recouvrement de l'espace intérieur, dans laquelle il y a, au fond de l'espace intérieur, un raccord commun, de préférence, exactement un raccord de ventilation, de ventilation et de sortie d'eau et dans laquelle une soupape (100, 200, 300, 400) combinée de ventilation, de ventilation et de sortie d'eau suivant l'une des revendications 1 à 10 est raccordée à ce raccord.
